# EUROPÄISCHE PATENTSCHRIFT

(11) **EP 2 245 761 B1**
(45) Veröffentlichungstag und Bekanntmachung des Hinweises auf die Patenterteilung: **28.09.2011**
(21) Anmeldenummer: 09702803.9
(22) Anmeldetag: 15.01.2009
(51) Int. Cl.: H04B 7/155

(54) **WEITERLEITUNGSKNOTEN UND ENDGERÄT FÜR EIN FDD-KOMMUNIKATIONSNETZWERK UND VERFAHREN DIESE ZU BETREIBEN**
ROUTING NODE AND TERMINAL FOR AN FDD COMMUNICATION NETWORK AND METHOD FOR OPERATING THEM
NOEUD DE TRANSMISSION ET TERMINAL POUR UN RÉSEAU DE COMMUNICATION FDD ET PROCÉDÉ D'UTILISATION DE CEUX-CI

(30) Priorität: 16.01.2008 DE 102008004690
(43) Veröffentlichungstag der Anmeldung: 03.11.2010
(73) Patentinhaber: Nokia Siemens Networks OY, 02610 Espoo (FI); Fraunhofer-Gesellschaft zur Förderung der angewandten Forschung e.V., 80686 München (DE)
(72) Erfinder: HALFMANN, Rüdiger, 67697 Otterberg (DE); HAUSTEIN, Thomas, 14469 Potsdam (DE); IBING, Andreas, 14055 Berlin (DE); ZIRWAS, Wolfgang, 81249 München (DE)
(86) Internationale Anmeldenummer: PCT/EP2009/050455
(87) Internationale Veröffentlichungsnummer: WO 2009/090233

(56) Entgegenhaltungen:
- WO-A-2007/036161
- WO-A-2007/128218
- WO-A-2007/147231
- US-A1- 2006 046 643
- RELAY TASK GROUP OF IEEE 802.16: "Part 16: Air interface for fixed and mobile broadband wireless access systems, Multihop relay specification" IEEE STANDARD 802.16J/D1, 8. August 2007 (2007-08-08), Seiten I-226, XP002527655 New York Gefunden im Internet: URL:http://ieeexplore.ieee.org/stamp/stamp D.jsp?arnumber=4312731&isnumber=4312730>
- XIAOBING LENG ET AL: "A frame structure for mobile multi-hop relay with different carrier frequencies" [Online] 11. November 2005 (2005-11-11), IEEE 802.16 SESSION #40 VANCOUVER CANADA MOBILE MULTIHOP RELAY (MMR) STUDY GROUP MEETING,, PAGE(S) 5 , XP003024474 Gefunden im Internet: URL:http://www.grouper.ieee.org/groups/802 /16/sg/mmr/contrib/C80216mmr-05 _025.pdf> [gefunden am 2009-02-01] Seiten 3,5,8

## Beschreibung

### Gebiet der Erfindung

Die Erfindung betrifft einen Weiterleitungsknoten und ein Endgerät für ein FDD-Kommunikationsnetzwerk. Ferner betrifft die Erfindung ein Verfahren zum Betreiben eines Weiterleitungsknotens und eines Endgeräts eines FDD-Kommunikationsnetwerks. Darüber hinaus betrifft die Erfindung ein Programmelement und ein computerlesbares Medium.

### Stand der Technik

Die Verwendung von so genannten Multihop-Weiterleitungsknoten wird für Mobilfunknetze wie beispielsweise die zurzeit zur Standardisierung anstehenden 3GPP LTE (Long Time Evolution) ins Auge gefasst. Derartige Multihop-Weiterleitungsknoten stellen ein Mittel bereit, um bei Erweiterungen von Systemen die notwendige Abdeckung zu erreichen, ohne dass für jeden Accessknoten die hohen Kosten für eine feste Netzwerkverbindung anfallen. Außerdem führt das Weiterleiten mittels der Weiterleitungsknoten zu einer Kapazitätsvergrößerung des Netzes, d.h. es können mehr Verbindungen innerhalb des Netzes aufrechterhalten werden, indem ein verbessertes Signal-zu-Rausch Verhältnis (SNR) erzielbar ist.

Bei der Verwendung von Multihop-Weiterleitungsknoten kommt es jedoch, insbesondere beim so genannten Frequency Division Duplex (FDD) Betrieb, zu dem Problem, dass es notwendig ist, dass die Multihop-Weiterleitungsknoten im Gegensatz zu Basisstationen und Endgeräten des Netzes in beiden Frequenzbändern empfangen und senden können müssen. Anders ausgedrückt, verhalten sich die Multihop-Weiterleitungsknoten in der einen Kommunikationsrichtung wie Basisstationen und in der entgegen gesetzten Richtung wie Endgeräte. Da es jedoch für den Multihop-Weiterleitungsknoten nicht möglich ist gleichzeitig auf dem gleichen Frequenzband zu senden und zu empfangen, kann es zu Problemen bei der Kommunikation mittels eines solchen Multihop-Weiterleitungsknoten kommen.

WO 2007/036161 beschreibt ein Relay-Kommunikationssystem zwischen einer Basisstation und einem Teilnehmerendgerät, mit dessen Hilfe der Abdeckungsbereich der Basisstation vergrößert und der Durchsatz des Endgeräts erhöht werden kann. Dabei ist die Basisstation mit einer Schnittstelle zur Kommunikation mit der Relay-Station ausgestattet; die Relay-Station ist mit Schnittstellen zur Kommunikation mit der Basisstation und dem Teilnehmerendgerät ausgestattet.

US 2006/046643 beschreibt ein drahtloses Kommunikationssystem mit einer Basisstation und einer Relay-Station, welche Informationen weiterleitet, sowie mit drahtlosen Endgeräten, die über die Relay-Station drahtlos mit der Basisstation kommunizieren. Dabei überträgt die Basisstation zur Relay-Station ein Datenburst-Paket und Scheduling-Informationen. Die Relay-Station wiederum empfängt die Scheduling-Informationen und das Datenburst-Paket und erzeugt Benachrichtigungsinformationen, die die Übertragungszeiten einer Präambel enthalten, um die Synchronisierung während des Empfangs am drahtlosen Endgerät zu gewährleisten. Des Weiteren werden diese Informationen an das drahtlose Endgerät übermittelt.

WO 2007/147231 beschreibt ein drahtloses Netzwerk, in dem eine Relay-Station als Zwischenstation genutzt werden kann, um eine Kommmunikation zwischen einer Basisstation und einem mobilen Gerät bereit zu stellen. Demgemäß werden OFDM Ressourcen für die Uplink- und Downlink-Kommunikation zwischen der Basisstation, der Relay-Station und/oder des mobilen Geräts zugewiesen, wobei Pilotsymbole in die von der Relay-Station genutzten Übertragungsressourcen eingefügt werden.

WO 2007/128218 offenbart ein drahtloses Multi-Hop-Zugangsnetz, in dem die Synchronisierung des Netzwerks aufrecht erhalten bleibt, indem sicher gestellt wird, dass alle mobilen Geräte innerhalb des Netzwerks einen identischen Synchronisationszeitpunkt besitzen. Dies wird dadurch erreicht, dass ein Rahmen erzeugt wird basierend auf einem Uplink-Unterrahmen sowie einem Downlink-Unterrahmen. Dabei umfasst der Uplink-Unterrahmen ein Uplink-Unterrahmen-Feld für Uplink-Relay-Informationen, die von einer Relay-Station ausgesendet werden. Der Downlink-Unterrahmen umfasst ein Downlink-Unterrahmen-Feld für Downlink-Relay-Informationen, die zu einer Relay-Station gesendet werden.

Die Veröffentlichung "Part 16: Air Interface for Fixed and Mobile Broadband Wireless Access Systems, multihop relay specification" IEEE standard 802.16J/D1, 8/August/2007, Seiten 1 - 226; spezifiziert Erweiterungen für die physikalische Schicht und die mittlere Zugangssteuerungsschicht bei OFDMA für den IEEE Standard 802.16, in Bezug auf lizensierte Bänder, um so die Funktion von Relay-Stationen zu ermöglichen.

Die Veröffentlichung "A frame structure for mobile multi-hop relay with different carrier frequencies" by Xiaobing Leng et al., 11.11.2005, IEEE 802.16 Session #40 Vancouver Canada, Mobile Multihop Relay (MMR) Study Group Meeting; beschreibt eine abwärts kompatible Rahmenstruktur für mobile Multi-Hop-Relay-Stationen.

### Zusammenfassung der Erfindung

Daher mag es Bedarf geben einen Weiterleitungsknoten und ein Endgerät bereitzustellen, welcher/s eine verbesserte Kommunikation in einem FDD-Kommunikationsnetzwerk bereitstellt.

Dieser Bedarf mag durch einen Weiterleitungsknoten, durch ein Endgerät, durch ein Verfahren zum Betreiben eines Weiterleitungsknotens, durch ein Verfahren zum Betreiben eines Endgeräts, durch ein Computerprogrammelement und durch ein computerlesbares Medium gemäß den unabhängigen Patentansprüchen erfüllt werden. Weitere Ausgestaltungen sind in den abhängigen Ansprüchen angegeben.

Gemäß einem exemplarischen Aspekt der Erfindung wird ein Weiterleitungsknoten für ein FDD-Kommunikationsnetz geschaffen, welcher eine Knoten-Empfangsvorrichtung, welche derart eingerichtet ist, dass mittels ihr Signale eines Endgeräts auf einer ersten Frequenz empfangbar sind, und eine Knoten-Sendevorrichtung aufweist, welche derart eingerichtet ist, dass mittels ihr Signale auf einer zweiten Frequenz an das Endgerät sendbar sind. Der Weiterleitungsknoten ist dabei derart eingerichtet, dass er ein Anzeigesignal an das Endgerät senden kann, welches anzeigt, ob der Weiterleitungsknoten zu einem gegebenen Zeitpunkt auf der ersten Frequenz Signale empfangen kann. Insbesondere mag der Weiterleitungsknoten ein so genannter Multihop-Weiterleitungsknoten sein. Beispielsweise mag das Anzeigesignal auf der zweiten Frequenz, alternativ mag es jedoch auch auf einer dritten Frequenz an das Endgerät gesendet werden. Insbesondere mag das Anzeigesignal in einer Erzeugungsvorrichtung des Weiterleitungsknotens erzeugt werden.

Gemäß einem anderen exemplarischen Aspekt der Erfindung wird ein Endgerät für ein FDD-Kommunikationsnetz geschaffen, wobei das Endgerät eine Endgerät-Empfangsvorrichtung, welche derart eingerichtet ist, dass mittels ihr Signale eines Weiterleitungsknotens auf einer zweiten Frequenz empfangbar sind, und eine Endgerät-Sendevorrichtung aufweist, welche derart eingerichtet ist, dass mittels ihr Signale auf einer ersten Frequenz an den Weiterleitungsknoten sendbar sind. Ferner weist das Endgerät eine Steuereinheit auf, und ist derart eingerichtet ist, dass es ein Anzeigesignal des Weiterleitungsknotens empfangen kann. Die Steuereinheit ist derart eingerichtet, dass sie einen Zeitpunkt des Sendens eines Anfragesignals an den Weiterleitungsknoten in Abhängigkeit von dem Anzeigesignal steuert. Insbesondere mag ein solches Anfragesignal beispielsweise ein so genanntes NACK-Signal oder eine so genannte NACK-Nachricht sein.

Gemäß einem anderen exemplarischen Aspekt der Erfindung wird ein Verfahren zum Betreiben eines Weiterleitungsknotens für ein FDD-Kommunikationsnetz geschaffen, wobei das Verfahren ein Bestimmen, ob der Weiterleitungsknoten in einem Endgerätemode oder einem Basisstationsmode ist, und ein Senden eines Anzeigesignals an ein Endgerät aufweist, wobei das Anzeigesignal indikativ für den bestimmten Mode ist.

Gemäß einem anderen exemplarischen Aspekt der Erfindung wird ein Verfahren zum Betreiben eines Endgeräts für ein FDD-Kommunikationsnetz geschaffen, wobei das Verfahren ein Empfangen eines Anzeigesignals in dem Endgerät, wobei das Anzeigesignal anzeigt, in welchem Mode sich ein Weiterleitungsknoten befindet, und ein Entscheiden aufweist, wann ein Anfragesignal an den Weiterleitungsknoten gesendet wird, wobei bei dem Entscheiden das Anzeigesignal berücksichtigt wird. Insbesondere mag das Anzeigesignal anzeigen, ob der Weiterleitungsknoten sich gerade in einem Basisstationsmode oder einem Empfangsgerätemode befindet und/oder ob der Weiterleitungsknoten gerade Empfangsbereit oder Sendebereit ist.

Gemäß einem anderen exemplarischen Aspekt der Erfindung wird ein Programmelement geschaffen, welches derart eingerichtet ist, dass es, wenn es auf einem Prozessor ausgeführt wird, ein Verfahren gemäß einem exemplarischen Aspekt der Erfindung steuert.

Gemäß einem anderen exemplarischen Aspekt der Erfindung wird ein computerlesbares Medium geschaffen, auf welchem ein Computerprogramm gespeichert ist, wobei das Computerprogramm derart eingerichtet ist, dass es, wenn es auf einem Prozessor ausgeführt wird, ein Verfahren gemäß einem exemplarischen Aspekt der Erfindung steuert.

Erfindungsgemäß mag auch ein Kommunikationsnetzwerk geschaffen werden, welches zumindest eine Basisstation, zumindest einen Weiterleitungsknoten gemäß einem Aspekt der Erfindung und zumindest ein Endgerät gemäß einem Aspekt der Erfindung aufweist.

Mittels eines Weiterleitungsknotens gemäß einem exemplarischen Aspekt der Erfindung, mag es möglich sein, einen Weiterleitungsknotens bereitzustellen, der einem Endgerät signalisieren kann, ob er für eine Übermittlung mit diesem bereit ist. Insbesondere mag es möglich sein, dem Endgerät zu signalisieren, ob er für den Empfang eines so genannten Acknowledge (ACK) Signals oder Not- Acknowledge-Signal bereit, ist. Mittels solchen Signalen übermittelt ein Endgerät in Kommunikationen, welche auf einem synchronen H-ARQ Retransmission-Protokoll (Hybrid Automatic Repeat reQuest) basieren, in der Uplink-Kommunikation, beispielsweise bei einem LTE Uplink, ob eine Übermittlung eines Signals fehlerfrei und/oder ordnungsgemäß stattgefunden hat oder ob eine synchrone Wiederholung (Retransmission) durchgeführt werden muss. Bei solchen synchronen H-ARQ Retransmission-Protokollen bedeutet dies, dass zumindest implizit H-ARQ Prozessnummern aus Zeitinformationen abgeleitet werden, um eine Retransmission durchzuführen. Mittels eines Weiterleitungsknotens gemäß einem exemplarischen Aspekt der Erfindung mag es möglich sein, diese Bestimmung auf den Weiterleitungsknoten auszudehnen, was vorteilhaft sein mag, da sich der Weiterleitungsknotens gerade in einem Mode befinden kann, in der er mit einer Basisstation kommuniziert, so dass ein Endgerät zu dem Zeitpunkt seine synchrone H-ARQ Rückmeldung (ACK/NACK) nicht an den Weiterleitungsknoten übermitteln kann.

Das Verwenden eines Anzeigesignals, welches für den Mode oder Zustand des Weiterleitungsknotens indikativ ist, mag ferner die Synchronisation und die Kanalschätzung, d.h. die Abschätzung wie gut der entsprechender Kanal zur Übermittlung geeignet ist und wie gut dessen Performance ist, verbessern, weil damit bekannt gemacht werden kann, ob sich der Weiterleitungsknoten gerade im einem Sendemode oder einem Empfangsmode befindet, so dass auch die Zeitintervalle bekannt sein mögen, zu denen der Weiterleitungsknoten keine Referenzsignale oder Pilotsignale versendet.

Auch mag es möglich sein, die Notwendigkeit feste Schaltzeitpunkte zwischen Empfangsmode und Sendemode einzuhalten zu umgehen, welche sonst zu einer unflexiblen und eine geringe Kommunikationskapazität bewirkenden Signalübertragung führen würde. Auch mag es so möglich sein sicher zu stellen, dass notwendige Steuerinformationen einen Adressaten erreichen.

Insbesondere mag ein Verfahren gemäß einem exemplarischen Aspekt der Erfindung auch sicherstellen, dass ACK/NACK-Signale oder -Nachrichten, welche gemäß synchronen H-ARQ Protokollen zu festgelegten Framepositionen in Relation zu den Framepositionen des empfangenen Signals oder Datenpakets gesendet werden, keine unnötigen Verzögerungen in der Kommunikation hervorrufen. Solche unnötigen Verzögerungen könnten in herkömmlichen Verfahren auftreten, da es dazu kommen kann, dass der Weiterleitungsknoten zu dem Zeitpunkt, zu dem das empfangene Endgerät seine ACK/NACK-Nachricht senden will, d.h. zu dem Zeitpunkt der dem im H-ARQ-Protokoll festgelegten Zeitpunkt für eine ACK/NACK-Nachricht entspricht, gerade nicht im Empfangsmode ist. Soll ein solcher Fall für alle beteiligten Endgeräte ausgeschlossen werden, so würde das möglicherweise in herkömmlichen Systemen zu einer unflexiblen Verteilung der Frames kommen, da hierdurch eine Einschränkung der Möglichkeiten des Weiterleitungsknotens bewirkt würde. Dieser Nachteil mag bei einem Verfahren gemäß einem exemplarischen Ausführungsbeispiel der Erfindung zumindest reduziert sein, da durch die Übermittlung des Anzeigesignals ein Zeitpunkt für die Übermittlung der ACK/NACK-Nachricht flexibler gewählt werden kann.

Eine Grundidee eines beispielhaften Aspekts der Erfindung mag sein, dass ein Weiterleitungsknoten einem Endgerät oder einer Mobilstation (MS), beispielsweise einem Mobiltelefon oder einem PDA, signalisiert, ob er sich im Übertragungsmode befindet, so dass die MS bestimmen kann, ob der Weiterleitungsknoten eine Nachricht an der Frameposition für eine synchrone H-ARQ-Nachricht, z.B. ACK/NACK-Nachricht, empfangen kann. Falls dies zu dieser Frameposition nicht möglich sein sollte, so kann die H-ARQ-Nachricht durch die MS verzögert werden, beispielsweise kann sie automatisch in den nachfolgenden Frame verzögert werden, oder in den nächsten Frame, in welchen der Weiterleitungsknoten empfangsbereit ist. Da dem Weiterleitungsknoten bekannt ist, wann er welche Nachricht oder welches Datenpaket von der MS empfangen sollte, mag er die neue Frameposition oder den neuen Frame berechnen können, an dem er eine H-ARQ-Nachricht von welcher MS erwarten muss. Hierdurch mag eine zusätzliche Feedback-Nachricht der MS überflüssig werden.

Insgesamt mag man sagen, dass ein solcher FDD-Weiterleitungsknoten ein Zeitduplexverfahren (time division duplexing) für zwei Moden verwenden, wobei der erste Mode eine Kommunikation mit der Basisstation (BS) bildet, und der zweite Mode eine Kommunikation mit der Mobilstation (MS) bildet. Somit mag das Verfahren gemäß einem beispielhaften Aspekt der Erfindung eine explizite oder inhärente Mitteilung von Modenwechseln aufweisen.

Nachfolgend werden weitere exemplarische Ausführungsbeispiele des Weiterleitungsknotens beschrieben. Jedoch gelten die entsprechenden Ausgestaltungen und Merkmale auch für das Endgerät, das Verfahren zum Betreiben eines Weiterleitungsknotens, das Verfahren zum Betreiben eines Endgeräts, das Computerprogrammelement und das computerlesbare Medium.

Gemäß einem anderen beispielhaften Ausführungsbeispiel des Weiterleitungsknotens ist der Weiterleitungsknoten derart eingerichtet, dass er sich in einem Endgerätemode oder in einem Basisstationsmode befinden kann. Ferner zeigt das Anzeigesignal an, in welchem Mode sich der Weiterleitungsknoten befindet. Insbesondere mag der Weiterleitungsknoten derart eingerichtet sein, dass er im Endgerätemode mit dem Endgerät kommunizieren kann und/oder dass er im Basisstationsmode mit einer Basisstation kommunizieren kann. D.h. im Basisstationsmode mag der Weiterleitungsknoten für Signale oder Datenpakete, welche von der BS gesendet werden empfangsbereit sein und Signale oder Datenpakete zu der BS senden können. Im Endgerätemode mag er hingegen für Signale oder Datenpakete, welche vom Endgerät oder von der Mobilstation gesendet werden empfangsbereit sein und Signale oder Datenpakete zu der MS senden können

Gemäß einem anderen beispielhaften Ausführungsbeispiel des Weiterleitungsknotens ist der Weiterleitungsknoten derart eingerichtet, dass er im Endgerätemode Signale zu dem Endgerät auf der ersten Frequenz senden kann und auf der zweiten Frequenz Signale des Endgeräts empfangen kann, und dass er im Basisstationsmode Signale zu einer Basisstation auf der zweiten Frequenz senden kann und auf der ersten Frequenz Signale der Basisstation empfangen kann.

Gemäß einem anderen beispielhaften Ausführungsbeispiel weist der Weiterleitungsknotens ferner eine Synchronisationseinheit auf, welche derart eingerichtet ist, dass mittels ihr der Weiterleitungsknoten mit einer Basisstation und/oder einem Endgerät synchronisierbar ist. Insbesondere mag der Weiterleitungsknoten eingerichtet sein, ein Synchronisationssignal einer Basisstation oder eines Endgeräts zu empfangen. Ferner mag die Synchronisationseinheit auch eingerichtet sein, dass mittels ihr ein Synchronisationssignal an Endgeräte und/oder Basisstationen sendbar ist. Insbesondere mag der Weiterleitungsknoten Endgeräten ständig ein Synchronisationssignal bereitstellen, so dass diese mit dem Weiterleitungsknoten synchronisiert bleiben können. Hierdurch mag es möglich sein, dass der Weiterleitungsknoten und die entsprechenden Endgeräte weiterhin synchronisiert bleiben, auch wenn in bestimmten Subframes keine Datenpakete oder Nachrichten empfangen werden.

Mittels eines Synchronisationssignals mag der Weiterleitungsknoten während oder kurz nach einem Einschaltvorgang zumindest einer groben Synchronisation unterzogen werden. Eine laufende Synchronisation mag während des Betriebs des Weiterleitungsknotens mittels Pilotsignalen durchgeführt werden. Derartige Pilotsignale können üblicherweise während einer Mobilkommunikation beispielsweise zum Überprüfen der Übertragungsqualität gesendet werden.

Nachfolgend werden weitere exemplarische Ausführungsbeispiele des Endgeräts beschrieben. Jedoch gelten die entsprechenden Ausgestaltungen und Merkmale auch für den Weiterleitungsknoten, das Verfahren zum Betreiben eines Weiterleitungsknotens, das Verfahren zum Betreiben eines Endgeräts, das Computerprogrammelement und das computerlesbares Medium.

Gemäß einem anderen beispielhaften Ausführungsbeispiel des Endgeräts ist das Anfragesignal ein H-ARQ-Signal, insbesondere ein synchrones H-ARQ-Signal. Insbesondere mag unter einem Anfragesignal auch ein Signal so genanntes ACK/NACK-Signal verstanden werden, also ein Signal mittels welchem das Endgerät einen ordnungsgemäßen Empfang eines Signals bestätigt oder nicht bestätigt und eine Wiederholungsanfrage sendet.

Gemäß einem anderen beispielhaften Ausführungsbeispiel des Endgeräts ist die Steuereinheit derart eingerichtet, dass als Zeitpunkt des Sendens des Anfragesignals an den Weiterleitungsknoten ein verzögerter Zeitpunkt bestimmt wird. Insbesondere mag der verzögerte Zeitpunkt einem verzögerten Frame oder einem späterem Frame entsprechen.

Zusammenfassend mag ein exemplarischer Aspekt der Erfindung darin gesehen werden, dass ein Weiterleitungsknoten und ein Endgerät geschaffen werden, wobei der Weiterleitungsknoten eine Anzeigenachricht aussendet, welche anzeigt, in welchem Mode sich der Weiterleitungsknoten derzeit befindet. Dies mag einem expliziten oder impliziten Mitteilen von Modeänderungen entsprechen. Für eine Implementierung mag es zwei Alternativen geben.

In einer ersten Alternative, welche möglichst wenig zusätzliches Signalisieren beinhaltet, mag die FDD-Struktur benutzt werden. Der derzeitige Entwurf für den LTE Standart beinhaltet, dass die gleiche generische Struktur für TDD und FDD benutzt werden sollen. Diese generische Struktur könnte dann auch für das Weiterleiten mittels Weiterleitungsknoten, z.B. das so genannte "Multihop Relaying" verwendet werden.

In einer zweiten Alternative mag eine optimierte Framestruktur TDD Notwendigkeiten, wie beispielsweise so genannte Turnaround Lücken, welche bei Wechsel zwischen Empfangsmode und Sendemode auftreten, berücksichtigt werden. Solche Lücken sind notwendig, dass ein Sender nicht sein eigenes Echo empfängt, wobei eine typische Zeitdauer solcher Turnaround Lücken etwa dem Doppelten des so genannten Channel Excess Delay entspricht. Insbesondere würde eine solche spezielle Multihop-Framestruktur jedoch ein Verwenden von spezifischen Signalen benötigen.

Die oben erläuterten und weitere exemplarische Aspekte und Ausführungsbeispiele werden dem Fachmann durch das nachfolgend erläuterte exemplarische Ausführungsbeispiel klarer verständlich werden. Ferner sollte bemerkt werden, dass Merkmale, welche oben im Zusammenhang mit einem bestimmten exemplarischen Aspekt oder Ausführungsbeispiel beschrieben wurden, auch mit anderen exemplarischen Aspekten und Ausführungsbeispielen kombiniert werden können.

### Kurzbeschreibung der Figur

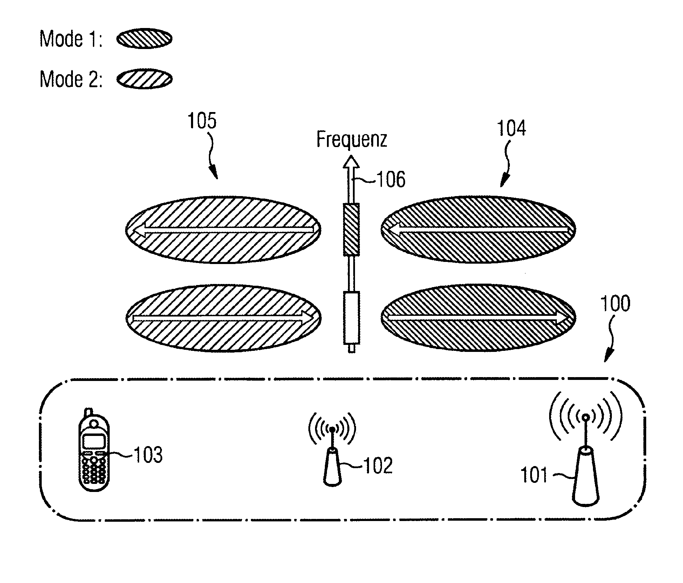

Fig. 1 zeigt eine schematische Darstellung eines Kommunikationsnetzwerks.

### Ausführliche Beschreibung

Fig. 1 zeigt eine schematische Darstellung eines Kommunikationsnetzwerks 100. In der Fig. 1 weist das Kommunikationsnetzwerk eine Basisstation 101, einen Multihop-Weiterleitungsknoten 102 und ein Endgerät, z.B. ein Mobiltelefon, 103 auf. In Wirklichkeit weist ein solches Kommunikationsnetzwerk eine Vielzahl von Basisstationen, Weiterleitungsknoten und Endgeräten auf, welche jedoch zur Wahrung der Übersichtlichkeit in Fig. 1 nicht dargestellt sind. Ferner sind in Fig. 1 schematisch zwei Moden, ein erster Mode 104 und ein zweiter Mode 105 angedeutet, wobei der erste Mode 104 einer Kommunikation zwischen dem Multihop-Weiterleitungsknoten 102 und dem Endgerät 103 entspricht und der zweite Mode 105 einer Kommunikation zwischen dem Multihop-Weiterleitungsknoten 102 und der Basisstation 101. Bei jeder dieser Kommunikationen werden in einem FDD-Netzwerk zwei Frequenzen verwendet, was schematisch mit dem Pfeil 106 angedeutet ist. Hierbei findet auf einer ersten Frequenz der Empfang des Multihop-Weiterleitungsknoten 102 von Sendungen des Endgeräts statt, wohingegen auf einer zweiten Frequenz die Sendung von Signalen oder Datenpaketen des Multihop-Weiterleitungsknotens 102 an das Endgerät 103 stattfindet. Im zweiten Mode, welcher die Kommunikation des Multihop-Weiterleitungsknotens 102 mit der Basisstation 101 betrifft, sind die Verhältnisse genau umgekehrt, d.h. der Multihop-Weiterleitungsknoten 102 sendet auf der ersten Frequenz und empfängt auf der zweiten Frequenz.

Im Folgenden wird kurz auf die Funktionsweise des Kommunikationsnetzes und insbesondere auf die des Multihop-Weiterleitungsknotens 102 eingegangen. Wenn der Multihop-Weiterleitungsknoten 102 angeschaltet wird, wird dieser mit der Basisstation synchronisiert, beispielsweise indem zuerst eine grobe Synchronisation mittels eines Kanalsynchronisationssignal SCH vorgenommen wird. Eine solche grobe Synchronisation muss nur beim Anschalten des Multihop-Weiterleitungsknotens 102 durchgeführt werden, wohingegen die fortlaufende und Feinsynchronisation mittels Pilotsignalen durchgeführt werden kann. Während des Betriebs des Multihop-Weiterleitungsknotens wird eine ständige Synchronisation zwischen dem Multihop-Weiterleitungsknoten und den Endgeräten durchgeführt, indem der Multihop-Weiterleitungsknoten das Synchronisationssignal selber an die Endgeräte weitersendet. Dies bedeutet, dass der Multihop-Weiterleitungsknoten synchronisiert bleiben sollte, auch wenn er in bestimmten Frames oder Subframes kein Empfang stattfindet.

Beispielsweise werden solche Synchronisationssignale SCH im LTE in den Subframes 1 und 6 (von 10) übermittelt, so dass der Multihop-Weiterleitungsknoten in diesen Subframes im Sendemode zu dem Endgeräten oder Terminals ist. In den anderen acht Subframes können die Moden gemäß einem von einer Mehrzahl von Möglichkeiten oder Mustern geschaltet werden. D.h. in diesen acht Subframes kann sich der Multihop-Weiterleitungsknoten entweder im oben erwähnten ersten Mode 104 oder zweitem Mode 105 befinden. Die Verteilung der Moden über die Subframes kann hierbei dynamisch an die Gegebenheiten angepasst werden, beispielsweise an das Datenaufkommen, die Netzlast oder die Kanalqualitäten. Hierbei kann ein so genanntes "Radio Source Management (RRM) verwendet werden. Insbesondere kann der Wechsel zwischen Empfangsmode und Sendemode an bestehende oder geplante Vorgaben angepasst oder angeglichen werden. Solche geplanten Vorgaben betreffen beispielsweise Zeitoffsets zwischen den Frameanfängen bei Downlink- und Uplink-Kommunikation in FDD Netzen.

Ein Beispiel für eine geeignete Signalisierung ist:
- Innerhalb des SCH Subframes (erster oder sechster Subframe) kann eine Informierung erfolgen, dass ein Multihop-Weiterleitungsknoten vorhanden oder aktiv ist.
- Änderungen der Verwendungen der einzelnen Subframes, d.h. ob sich der Multihop-Weiterleitungsknoten während eines bestimmten Subframe im ersten Mode 104 oder zweiten Mode 105 befindet, können mittels bekannter Radio Resource Management Nachrichten signalisiert werden.
- Alternativ könnte auch ein Steuerkanal verwendet werden.

Zur Verbesserung der Überwachung des Kanals, z.B. Performance des Kanals (z.B. CFO-tracking), werden die Subframes ausgelassen, in welchen der Weiterleitungsknoten nicht erreichbar war. Diese Subframes, werden auch innerhalb des synchronen H-ARQ Protokoll ausgelassen oder übersprungen. Weiterhin sollte auch der Scheduler der Basisstation derart eingerichtet sein, dass er eine Übertragung zu dem Weiterleitungsknoten nur dann ansetzt oder scheduled, wenn der Weiterleitungsknoten in einem entsprechenden Mode ist, d.h. wenn er für Datenpakete von der Basisstation empfangsbereit ist (Downlink Baisstation-Weiterleitungsknoten).

Eine solche Signalisierung mag eine synchrone H-ARQ-Kommunikation in Verbindung mit Weiterleitungsknoten ermöglichen, welche jedoch ihre gesamte Flexibilität zum Definieren ihrer Framestrukturen erhalten und nutzen können. Ferner mag es möglich sein, optimierte Synchronisationsalgorithmen bereitzustellen, insbesondere bei zeitweiliger Übertragung von Synchronisationssignalen oder Steuerkanalsignalen durch den Weiterleitungsknoten. Weiterhin mag es mit einer solchen Signalisierung und der Verwendung eines solchen Weiterleitungsknoten auch möglich sein, dass Endgeräte, welche diese Signalisierung nicht kennen oder welche nicht wissen, dass ein Weiterleitungsknoten vorhanden ist, auch von einem solchen FDD-Weiterleitungsknoten mit Signalen versorgt werden, wobei dies jedoch zu einer Performanceverminderung führen kann, da Datenpakete, insbesondere auch die ACK/NACK-Nachrichten, verloren gehen können.

Die Ausführung der Erfindung ist nicht auf diese Anwendungsfälle und die weiter oben erwähnten Systemkonfigurationen beschränkt, sondern ebenso in einer Vielzahl von Abwandlungen möglich, die im Rahmen fachgemäßen Handelns liegen. Ferner sollte darauf hingewiesen werden, dass Bezugszeichen in den Ansprüchen nicht als beschränkend aufzufassen sind und dass die Begriffe "aufweisen" bzw. "aufweisend" und ähnliche Begriffe nicht das Vorhandensein von weiteren Elementen oder Schritten ausschließt. Auch schließt ein Aufzählen als mehrere Mittel oder Elemente nicht aus, dass diese Mittel oder Elemente als ein einziges Mittel oder Element ausgebildet werden können.

### Bezugszeichenliste

- 100: Kommunikationsnetzwerk
- 101: Basisstation
- 102: Weiterleitungsknoten
- 103: Endgerät
- 104: erster Mode
- 105: zweiter Mode
- 106: Frequenz

## Patentansprüche

1. Multihop-Weiterleitungsknoten (102) für ein FDD-Kommunikationsnetz (100), welcher aufweist:
eine Knoten-Empfangsvorrichtung, welche derart eingerichtet ist, dass mittels ihr Signale eines Endgeräts (103) auf einer ersten Frequenz empfangbar sind,
eine Knoten-Sendevorrichtung, welche derart eingerichtet ist, dass mittels ihr Signale auf einer zweiten Frequenz an das Endgerät (103) sendbar sind, und
eine Synchronisationseinheit, welche derart eingerichtet ist, dass mittels ihr ein Synchronisationssignal an das Endgerät und/oder eine Basisstation (101) sendbar ist, so dass mittels des Synchronisationssignals der Multihop-Weiterleitungsknoten (102) mit der Basisstation (101) und/oder dem Endgerät (103) synchronisierbar ist,
wobei der Multihop-Weiterleitungsknoten (102) derart eingerichtet ist, dass er sich in einem Endgerätemode, in dem er mit dem Endgerät kommunizieren kann, oder in einem Basisstationsmode, in dem er mit der Basisstation kommunizieren kann, befinden kann, und ferner dazu eingerichtet ist, dass er ein Anzeigesignal an das Endgerät (103) senden kann, welches anzeigt, ob der Multihop-Weiterleitungsknoten (102) zu einem gegebenen Zeitpunkt auf der ersten Frequenz Signale empfangen kann, und
wobei das Anzeigesignal anzeigt, in welchem Mode sich der Multihop-Weiterleitungsknoten (102) befindet.

2. Multihop-Weiterleitungsknoten (102) gemäß Anspruch 1,
wobei der Multihop-Weiterleitungsknoten (102) derart eingerichtet ist, dass er im Endgerätemode Signale zu dem Endgerät (103) auf der ersten Frequenz senden kann und auf der zweiten Frequenz Signale des Endgeräts (103) empfangen kann, und dass er im Basisstationsmode Signale zu einer Basisstation (101) auf der zweiten Frequenz senden kann und auf der ersten Frequenz Signale der Basisstation (101) empfangen kann.

3. Endgerät (103) für ein FDD-Kommunikationsnetz (100), welches aufweist:
eine Endgerät-Empfangsvorrichtung, welche derart eingerichtet ist, dass mittels ihr Signale eines Multihop-Weiterleitungsknotens (102) auf einer zweiten Frequenz empfangbar sind,
eine Endgerät-Sendevorrichtung, welche derart eingerichtet ist, dass mittels ihr Signale auf einer ersten Frequenz an den Multihop-Weiterleitungsknoten (102) sendbar sind, und
eine Steuereinheit,
wobei das Endgerät (103) derart eingerichtet ist, dass es ein Anzeigesignal und ein Synchronisationssignal des Multihop-Weiterleitungsknotens (102) empfangen kann, wobei mittels des Synchronisationssignals das Endgerät (103) mit dem Multihop-Weiterleitungsknoten synchronisierbar ist, wobei das Anzeigesignal anzeigt, in welchem Mode von einem Endgerätemode, in dem er mit dem Endgerät kommunizieren kann, und einem Basisstationsmode, in dem er mit der Basisstation kommunizieren kann, sich der Multihop-Weiterleitungsknoten (102) befindet, und
wobei die Steuereinheit derart eingerichtet ist, dass sie einen Zeitpunkt des Sendens eines Anfragesignals an den Multihop-Weiterleitungsknoten (102) in Abhängigkeit von dem Anzeigesignal steuert.

4. Endgerät (103) gemäß Anspruch 3,
wobei das Anfragesignal ein H-ARQ-Signal, insbesondere ein synchrones H-ARQ-Signal ist.

5. Endgerät (103) gemäß Anspruch 4,
wobei die Steuereinheit derart eingerichtet ist, dass als Zeitpunkt des Sendens des Anfragesignals an den Multihop-Weiterleitungsknoten (102) ein verzögerter Zeitpunkt bestimmt wird.

6. Verfahren zum Betreiben eines Multihop-Weiterleitungsknotens (102) gemäß einem der Ansprüche 1 oder 2 für ein FDD-Kommunikationsnetz (100), wobei das Verfahren aufweist:
Bestimmen, ob der Multihop-Weiterleitungsknoten (102) in einem Endgerätemode, in dem er mit dem Endgerät kommunizieren kann, oder einem Basisstationsmode, in dem er mit der Basisstation kommunizieren kann, ist, und
Senden eines Anzeigesignals an ein Endgerät, wobei das Anzeigesignal indikativ für den bestimmten Mode ist.

7. Verfahren zum Betreiben eines Endgeräts (103) gemäß einem der Ansprüche 3 bis 5 für ein FDD-Kommunikationsnetz (100), wobei das Verfahren aufweist:
Empfangen eines Anzeigesignals in dem Endgerät (103), wobei das Anzeigesignal anzeigt, ob sich ein Multihop-Weiterleitungsknoten (102) in einem Endgerätemode, in dem er mit dem Endgerät kommunizieren kann, oder einem Basisstationsmode, in dem er mit der Basisstation kommunizieren kann, befindet,
Entscheiden, wann ein Anfragesignal an den Multihop-Weiterleitungsknoten (102) gesendet wird, wobei bei dem Entscheiden das Anzeigesignal berücksichtigt wird.

8. Programmelement, welches derart eingerichtet ist, dass es, wenn es auf einem Prozessor ausgeführt wird, ein Verfahren gemäß Anspruch 6 oder 7 steuert.

9. Computerlesbares Medium, auf welchem ein Computerprogramm gespeichert ist, wobei das Computerprogramm derart eingerichtet ist, dass es, wenn es auf einem Prozessor ausgeführt wird, ein Verfahren gemäß Anspruch 6 oder 7 steuert.

## Claims

1. Multihop forwarding node (102) for an FDD communication network (100), which has:
a node reception apparatus which is set up such that it can be used to receive signals from a terminal (103) on a first frequency,
a node transmission apparatus which is set up such that it can be used to send signals on a second frequency to the terminal (103), and
a synchronization unit which is set up such that it can be used to send a synchronization signal to the terminal and/or a base station (101), so that the synchronization signal can be used to synchronize the multihop forwarding node (102) to the base station (101) and/or the terminal (103),
wherein the multihop forwarding node (102) is set up such that it may be in a terminal mode, in which it can communicate with the terminal, or in a base station mode, in which it can communicate with the base station, and is also set up such that it can send an indicator signal to the terminal (103) which indicates whether the multihop forwarding node (102) can receive signals at a given time on the first frequency, and
wherein the indicator signal indicates which mode the multihop forwarding node (102) is in.

2. Multihop forwarding node (102) according to claim 1,
wherein the multihop forwarding node (102) is set up such that in the terminal mode it can send signals to the terminal (103) on the first frequency and can receive signals from the terminal (103) on the second frequency, and such that in the base station mode it can send signals to a base station (101) on the second frequency and can receive signals from the base station (101) on the first frequency.

3. Terminal (103) for an FDD communication network (100), which has:
a terminal reception apparatus which is set up such that it can be used to receive signals from a multihop forwarding node (102) on a second frequency,
a terminal transmission apparatus which is set up such that it can be used to send signals on a first frequency to the multihop forwarding node (102), and
a control unit,
wherein the terminal (103) is set up such that it can receive an indicator signal and a synchronization signal from the multihop forwarding node (102), wherein the synchronization signal can be used to symphonize the terminal (103) to the multihop forwarding node,
wherein the indicator signal indicates which mode from a terminal mode, in which it can communicate with the terminal, and a base station mode, in which it can communicate with the base station, the multihop forwarding node (102) is in, and
wherein the control unit is set up such that it controls a time for the sending of a request signal to the multihop forwarding node (102) on the basis of the indicator signal.

4. Terminal (103) according to Claim 3,
wherein the request signal is an H-ARQ signal, particularly a synchronous H-ARQ signal.

5. Terminal (103) according to Claim 4,
wherein the control unit is set up such that the time determined for the sending of the request signal to the multihop forwarding node (102) is a delayed time.

6. Method for the operation of a multihop forwarding node (102) according to one of Claims 1 and 2 for an FDD communication network (100), wherein the method involves:
determining whether the multihop forwarding node (102) is in a terminal mode, in which it can communicate with the terminal, or a base station mode, in which it can communicate with the base station, and
sending an indicator signal to a terminal, wherein the indicator signal is indicative of the determined mode.

7. Method for the operation of a terminal (103) according to one of Claims 3 to 5 for an FDD communication network (100), wherein the method involves:
receiving an indicator signal in the terminal (103), wherein the indicator signal indicates whether a multihop forwarding mode (102) is in a terminal mode, in which it can communicate with the terminal, or a base station mode, in which it can communicate with the base station,
deciding when a request signal is sent to the multihop forwarding node (102), wherein the decision takes account of the indicator signal.

8. Program element which is set up such that, when executed on a processor, it controls a method according to Claim 6 or 7.

9. Computer-readable medium which stores a computer program, wherein the computer program is set up such that, when executed on a processor, it controls a method according to Claim 6 or 7.

## Revendications

1. Noeud de retransmission multi-sauts (102) pour un réseau de communication FDD (100), comportant :
- un dispositif récepteur de noeud qui est aménagé de manière telle qu'il rend possible la réception de signaux d'un terminal (103) sur une première fréquence ;
- un dispositif émetteur de noeud qui est aménagé de manière telle qu'il rend possible l'envoi de signaux au terminal (103) sur une deuxième fréquence ; et
- une unité de synchronisation qui est aménagée de manière telle qu'elle rend possible l'envoi d'un signal de synchronisation au terminal et/ou à une station de base (101) de sorte que le noeud de retransmission multi-sauts (102) peut être synchronisé sur la station de base (101) et/ou sur le terminal (103) au moyen du signal de synchronisation ;
- le noeud de retransmission multi-sauts (102) étant aménagé de manière telle qu'il peut se trouver dans un mode « terminal » dans lequel il peut communiquer avec le terminal ou dans un mode « station de base » dans lequel il peut communiquer avec la station de base, et étant en outre aménagé pour pouvoir envoyer au terminal (103) un signal de notification qui indique si le noeud de retransmission multi-sauts (102) peut recevoir des signaux sur la première fréquence à un instant donné ; et
- le signal de notification indiquant dans quel mode se trouve le noeud de retransmission multi-sauts (102).

2. Noeud de retransmission multi-sauts (102) selon la revendication 1, le noeud de retransmission multi-sauts (102) étant aménagé de manière telle qu'il peut, en mode « terminal », envoyer des signaux au terminal (103) sur la première fréquence et recevoir des signaux du terminal (103) sur la deuxième fréquence et qu'il peut, en mode « station de base », envoyer des signaux à une station de base (101) sur la deuxième fréquence et recevoir des signaux de la station de base (101) sur la première fréquence.

3. Terminal (103) pour un réseau de communication FDD (100), comportant :
- un dispositif récepteur de terminal qui est aménagé de manière telle qu'il rend possible la réception de signaux d'un noeud de retransmission multi-sauts (102) sur une deuxième fréquence ;
- un dispositif émetteur de terminal qui est aménagé de manière telle qu'il rend possible l'envoi de signaux au noeud de retransmission multi-sauts (102) sur une première fréquence ; et
- une unité de commande ;
- le terminal (103) étant aménagé de manière telle qu'il peut recevoir un signal de notification et un signal de synchronisation du noeud de retransmission multi-sauts (102), le signal de synchronisation rendant possible la synchronisation du terminal (103) sur le noeud de retransmission multi-sauts (102), le signal de notification indiquant dans quel mode se trouve le noeud de retransmission multi-sauts (102) - un mode « terminal » dans lequel il peut communiquer avec le terminal ou un mode « station de base » dans lequel il peut communiquer avec la station de base ; et
- l'unité de commande étant aménagée de manière telle qu'elle commande un instant de l'envoi d'un signal d'interrogation au noeud de retransmission multi-sauts (102) en fonction du signal de notification.

4. Terminal (103) selon la revendication 3, le signal d'interrogation étant un signal H-ARQ, et plus particulièrement un signal H-ARQ synchrone.

5. Terminal (103) selon la revendication 4, l'unité de commande étant aménagée de manière telle qu'est déterminé, comme instant de l'envoi du signal d'interrogation au noeud de retransmission multi-sauts (102), un instant retardé.

6. Procédé pour exploiter un noeud de retransmission multi-sauts (102) selon l'une des revendications 1 ou 2 pour un réseau de communication FDD (100), le procédé incluant :
- la détermination de la question de savoir si le noeud de retransmission multi-sauts (102) se trouve dans un mode « terminal » dans lequel il peut communiquer avec le terminal ou dans un mode « station de base » dans lequel il peut communiquer avec la station de base ; et
- l'envoi d'un signal de notification à un terminal, le signal de notification indiquant le mode déterminé.

7. Procédé pour exploiter un noeud de retransmission multi-sauts (102) selon l'une des revendications 3 à 5 pour un réseau de communication FDD (100), le procédé incluait :
- la réception d'un signal d'affichage dans le terminal (103), le signal de notification indiquant si un noeud de retransmission multi-sauts (102) se trouve dans un mode « terminal » dans lequel il peut communiquer avec le terminal ou dans un mode « station de base » dans lequel il peut communiquer avec la station de base ;
- la décision relative à l'instant de l'envoi d'un signal d'interrogation au noeud de retransmission multi-sauts (102), le signal de notification étant pris en considération dans la décision.

8. Élément de programme qui est aménagé de manière telle qu'il commande un procédé selon la revendication 6 ou 7 lorsqu'il est exécuté sur un processeur.

9. Support lisible par ordinateur sur lequel est stocké un programme informatique, le programme informatique étant aménagé de manière telle qu'il commande un procédé selon la revendication 6 ou 7 lorsqu'il est exécuté sur un processeur.
